# EUROPÄISCHE PATENTSCHRIFT

(11) **EP 3 025 059 B1**
(45) Veröffentlichungstag und Bekanntmachung des Hinweises auf die Patenterteilung: **12.06.2019**
(21) Anmeldenummer: 14717144.1
(22) Anmeldetag: 14.04.2014
(51) Int. Cl.: F04B 35/04, F04B 39/00, F04B 39/10, F04B 39/12, F04B 49/02, F04B 49/03, F04B 49/12, F04B 35/06, F04B 49/08, F04B 49/22

(54) **KOMPRESSOR MIT DRUCKBEGRENZUNG**
COMPRESSOR HAVING PRESSURE LIMITATION
COMPRESSEUR À LIMITATION DE LA PRESSION

(30) Priorität: 23.07.2013 DE 102013107850
(43) Veröffentlichungstag der Anmeldung: 01.06.2016
(73) Patentinhaber: Continental Reifen Deutschland GmbH, 30165 Hannover (DE)
(72) Erfinder: ZAUM, Christopher, 30926 Seelze (DE); DETERING, Rainer, 30926 Seelze (DE)
(74) Vertreter: Kilsch, Armin Ralph
(86) Internationale Anmeldenummer: PCT/EP2014/057465
(87) Internationale Veröffentlichungsnummer: WO 2015/010799

(56) Entgegenhaltungen:
- DE-A1- 4 429 097
- DE-A1-102005 060 320
- DE-A1-102011 050 714
- DE-A1-102011 050 806

## Beschreibung

Die Erfindung betrifft eine Kompressoreinheit in einer tragbaren Druckluftquelle, welche einen über ein Schubkurbelgetriebe angetriebenen Hubkolbenverdichter mit einem in einem Zylinder oszillierend bewegten Kolben aufweist, der einen mit einem ersten Totluftvolumen versehenen Kompressionsraum begrenzt, wobei der Zylinder ausgangsseitig durch einen Zylinderkopf mit Auslassventil verschlossen ist

Solche Kompressoreinheiten werden z. B. mit oder als Teil von Vorrichtungen zum Abdichten und Aufpumpen aufblasbarer Gegenstände, insbesondere zum Abdichten und Aufpumpen von Kraftfahrzeugreifen benötigt (Pannensets).

Diese tragbaren und leichten Vorrichtungen beinhalten die Kompressoreinheit als Druckgasquelle auf, weisen weiterhin einen Dichtmittelbehälter für ein in den aufblasbaren Gegenstand einfüllbares selbsttätiges Dichtmittel auf, eine Ventil- und Verteilereinheit für Dichtmittel und Druckgas und sind mit einer an die Druckgasquelle anschließbaren Einlassleitung und einer an den aufblasbaren Gegenstand anschließbaren Auslassleitung versehen.

Bei solchen Vorrichtungen ist der maximale Druck im System entweder durch den maximal erreichbaren Druck des Kompressors festgelegt, wobei der Maximaldruck dann bauartbedingt maßgeblich vom so genannten "Totvolumen" des Zylinders abhängt, oder wird durch ein Druckbegrenzungsventil bestimmt.

Da mit den genannten Luftkompressoren während der Behebung einer Reifenpanne auch ein Dichtmittel in den Reifen gepresst wird, kann bei der Druckbegrenzung durch ein Überdruckventil in manchen Betriebszuständen durch Öffnen dieses Ventils Dichtmittel unter hohem Druck unerwünscht austreten und/oder in den Zylinder des Kompressors gelangen. Dieser Fall tritt z.B. ein, wenn das Reifenventil während der Befüllung mit Dichtmittel verstopft und sich im Luftkompressor so ein unzulässig hoher Druck aufbaut. Die bisher benutzten Begrenzungsventile öffnen dabei auf der Hochdruckseite und lassen einen Volumenstrom auf der Hochdruckseite aus dem System austreten. Wenn Dichtmittel auch nur in geringen Umfang in den Kompressor und die anschließenden Leitungen gelangt, können durch diesen Rückfluss entweder die Manometerfunktion oder auch das Auslassventil des Kompressors in seiner Funktion beeinträchtigt werden.

Eine solche Lösung zeigt die die DE 44 29 097 A1. Dort ist eine Kompressoreinheit bzw. einen Kolbenverdichter mit einem im Stand der Technik üblichen Auslassventil offenbart, welches gleichzeitig das einzige "Überdruckventil" für den Innenraum des Kompressors ist. Ein solches Auslassventil besteht aus einer federbelasteten Scheibe, welche eine Auslassbohrung des Verdichtungsraums im Zylinder abdeckt und bei entsprechendem Druck im Verdichtungsraum gegen die Feder abhebt. Abgesehen davon, dass ein solches Auslassventil für sehr hohe Öffnungsfrequenzen, d.h. für sehr schnell bewegte Kolbenkompressoren mit kurzem Hub, nur bedingt geeignet ist, ist es hier erforderlich, einen bestimmten Rohrlängenabstand zum Dichtmittelbehälter bzw. zur zugehörigen Verteilereinheit einzuhalten, um einen Rückfluss von Dichtmittel in den Kompressionsraum/Druckraum zu verhindern. Dies erhöht insgesamt die Baugröße von Vorrichtungen zum Abdichten und Aufpumpen aufblasbarer Gegenstände.

Weiter ist eine Kompressoreinheit mit einem Motor und einem über einen Schubkurbeltrieb angetriebenen Hubkolbenverdichter aus den Druckschriften DE 10 2011 050 714 A1 und DE10 2005 060 320 A1 bekannt.

Wird in die Zuleitung zum geschädigten Reifen zur Verhinderung eines Dichtmittelrückfluss ein zusätzliches Rückschlagventil eingebaut, so verhindert dieses Rückschlagventil nachteiligerweise eine genaue Druckmessung in dem zu reparierenden Reifen.

Ein Totvolumen ist bei jedem Hubkolbenverdichter vorhanden, da ja der Kolbenboden im oberen Totpunkt einen gewissen und von Null verschiedenen Abstand zur Innenoberfläche des Zylinderkopfes haben muss. Bei einer "Druckbegrenzung" durch ein entsprechend groß ausgelegtes Totluftvolumen, d.h. durch einen großen Abstand zwischen Kolbenboden und Innenoberfläche des Zylinderkopfes besteht die Gefahr eines Dichtmittelaustritts nicht, da kein Luft bzw. Luft/Dichtmittelgemisch in die Umgebung abgelassen wird. Ein entsprechend ausgelegtes Totluftvolumens im Kompressor vermindert jedoch dessen Effizienz und erfordert so einen unnötig großen bzw. teuren Kompressor zum Erreichen einer vorgegebenen Spezifikation.

Handelsübliche Pannensets zur Reifenabdichtung, die über einen Kleinkompressor verfügen, mit dessen Hilfe Reifen aufgepumpt werden können, nutzen zur Begrenzung des Maximaldruckes in der Regel also entweder das Auslassventil im Kompressionsraum oder aber ein Ventil in den in Strömungsrichtung dem Kompressionsraum nach gelagerten Leitungen, z. B. in der nachfolgenden Verteilereinheit, welches somit zwischen Auslassventil und Reifenventil bzw. zwischen Kompressor und Manometer angeordnet ist.

Für die Erfindung bestand daher die Aufgabe, eine Kompressoreinheit mit einem Hubkolbenverdichter bereitzustellen, bei der die Begrenzung des Maximaldrucks im Kompressionsraum bei gleichzeitiger Vermeidung von Dichtmittelrückfluß gewährleistet ist, bei der ein plötzlich auf der Hochdruckseite aus dem System austretenden Volumenstrom vermieden wird und bei der bei einfacher Bauweise insgesamt die Gebrauchsdauer und Zuverlässigkeit des Kompressors erhöht wird.

Gelöst wird diese Aufgabe durch die Merkmale des Hauptanspruchs. Weitere vorteilhafte Ausbildungen sind in den Unteransprüchen offenbart.

Dabei ist der Kompressionsraum über ein Ventil mit mindestens einem weiteren Totluftvolumen verbindbar. So erfolgt nicht nur eine mechanisch arbeitende Maximaldruckbegrenzung für einen Luftkompressor, bei der zu keinem Zeitpunkt ein Luftstrom in die Umgebung des Kompressors abgeführt wird und die Effizienz des Kompressors innerhalb seines Arbeitsbereiches nicht verringert wird, es wird gleichermaßen auch die Größe des gesamten Totluftvolumens, d.h. der Inhalt des ersten und weiteren Totluftvolumens in Abhängigkeit von verschiedenen Betriebszuständen der Kompressoreinheit gesteuert bzw. eingestellt. Es ist damit möglich, das erste Totvolumen des Zylinders zu verringern und dadurch auch den Wirkungsgrad des Kompressors deutlich zu erhöhen und trotzdem ein für die gestellten Anforderungen/Aufgaben ausreichendes weiteres Totluftvolumen zur Verfügung zu haben, welches bei zu hohen Drücken zugeschaltet wird.

Eine vorteilhafte Weiterbildung besteht darin, dass das zweite Totluftvolumen mit dem Kompressionsraum über das Ventil abhängig vom Druck in der Auslassleitung des Kompressors oder abhängig vom Druck im Kompressionsraum verbindbar ist, vorzugsweise reversibel über das Ventil verbindbar ist, wobei das Ventil vorzugsweise federbelastet ist. Damit wird die Druckstufe, an der das Ventil anspricht und bei der das Ventil öffnet, sehr gut einstellbar und die Auslegung wird vereinfacht.

Eine weitere vorteilhafte Ausbildung besteht darin, dass das weitere Totluftvolumen variabel ist und sich abhängig vom Druck in der Auslassleitung des Kompressors oder abhängig vom Druck im Kompressionsraum kontinuierlich in seinem Inhalt verändern lässt. Eine solche druckabhängig variable Veränderung des aus dem Inhalt des ersten und weiteren Totluftvolmen bestehenden Gesamtinhalt des zur Verfügung stehenden Totluftvolumens erlaubt eine tatsächlich an den Betriebszustand des Kompressors gekoppelte Steuerung bzw. eine durch die Rückkopplung auch im Sinne einer Regelung arbeitende variable Einstellung des Totluftvolumens über den gesamten Arbeitsbereich.

Vorteilhafte konstruktive Ausbildungen einer solchen druckabhängig variable Veränderung des Totluftvolumens können dadurch erfolgen, das entweder das weitere Totluftvolumen gegen druckabhängig belastbare Federn oder durch ein auf Druckänderungen reagierendes elektromechanisches Stellglied kontinuierlich veränderbar ist.

Eine weitere vorteilhafte Ausbildung besteht darin, dass das Ventil eine Drosseleinrichtung zur Dämpfung von Druckspitzen aus dem Zylinder bzw. Kompressionsraum beinhaltet. Damit werden Stöße und Schwingungen der Luftsäule vermieden, die die Funktion der Zuschaltung des zweiten Totluftvolumens stören könnten.

Eine weitere vorteilhafte Ausbildung besteht darin, dass das Totluftvolumen mit dem Kompressionsraum irreversibel über das Ventil verbindbar ist, beispielsweise über ein bei einem Nenndruck öffnenden Berstventil. Dadurch wird die Konstruktion sehr einfach, allerdings nimmt man dabei in Kauf, dass in dem Moment, in dem der Druck in der Auslassleitung des Kompressors zu einem bestimmten Zeitpunkt wieder unter den zulässigen Wert sinkt, der Kompressor mit verringerter Effizienz weiter arbeitet, da das zweite Totluftvolumen nicht wieder abgetrennt wird.

Eine weitere vorteilhafte Ausbildung besteht darin, dass das Ventil ein manuell wieder verschließbares Ventil ist, vorzugsweise ein Ventil mit einem von außen sichtbaren Indikator für die Offen-Stellung. Auch hier ist die Konstruktion sehr vereinfacht, wobei aber trotzdem eine Rückstellung manuell möglich ist und der Kompressor mit der ursprünglichen Effizient weiter betrieben werden kann.

Besonders geeignet ist solch eine Kompressoreinheit zur Anwendung mit einer Vorrichtung zum Abdichten und Aufpumpen aufblasbarer Gegenstände, insbesondere zum Abdichten und Aufpumpen von Kraftfahrzeugreifen.

Anhand eines Ausführungsbeispiels soll die Erfindung näher erläutert werden. Es zeigen
- Fig. 1: eine erfindungsgemäße Kompressoreinheit, bei der das zweite Totluftvolumen mit dem Kompressionsraum reversibel verbindbar ist, im Normalzustand.
- Fig. 2: eine erfindungsgemäße Kompressoreinheit gemäß Fig. 1 im Zustand mit zugeschaltetem zweitem Totluftvolumen
- Fig. 3: ein weiteres Ausführungseispiel einer erfindungsgemäßen Kompressoreinheit, bei der das zweite Totluftvolumen mit dem Kompressionsraum irreversibel verbindbar ist, im Normalzustand.
- Fig. 4: eine erfindungsgemäße Kompressoreinheit gemäß Fig. 3 im Zustand mit zugeschaltetem zweitem Totluftvolumen.
- Fig. 5: den experimentell bestimmten Zusammenhang zwischen Größe des zweiten Totluftvolumens sowie erreichtem Maximaldruck eines Luftkompressors in einem Diagramm
- Fig. 6: eine erfindungsgemäße Kompressoreinheit, bei der das Totluftvolumen variabel und abhängig vom Druck im Kompressionsraum veränderbar ist.

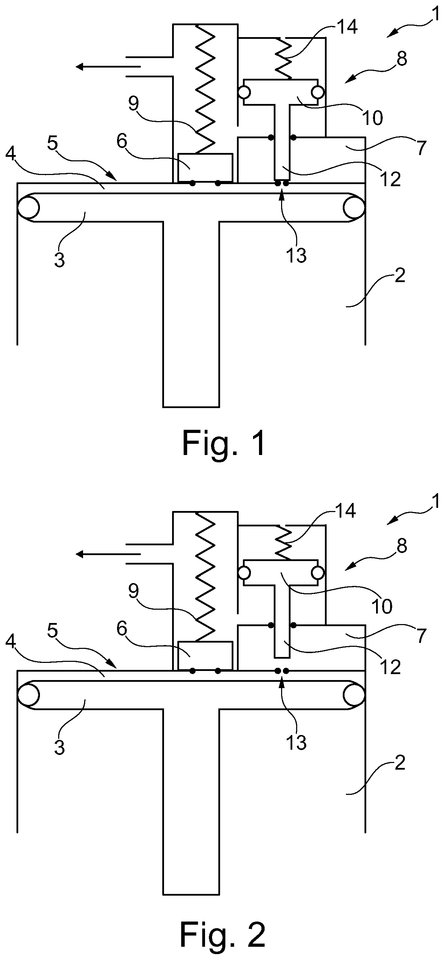

Fig. 1 und 2 zeigen streng schematisch als Prinzipskizze ein Ausführungsbeispiel einer erfindungsgemäßen Kompressoreinheit in einer hier nicht näher dargestellten tragbaren Druckluftquelle für das Aufpumpen von Kraftfahrzeugreifen im Fall des Luftverlustes. Fig. 1 stellt den Normalzustand dar. Fig. 2 zeigt den Zustand mit zugeschaltetem zweitem Totluftvolumen.

Die Kompressoreinheit weist einen über ein hier ebenfalls nicht dargestelltes Schubkurbelgetriebe angetriebenen Hubkolbenverdichter 1 mit einem in einem Zylinder 2 oszillierend bewegten Kolben 3 auf, der einen mit einem ersten Totluftvolumen 4 versehenen Kompressionsraum begrenzt, wobei der Zylinder ausgangsseitig durch einen Zylinderkopf 5 mit Auslassventil 6 verschlossen ist.

Der Hubkolbenverdichter 1 weist ein zweites Totluftvolumen 7 auf, welches über ein Ventil 8 mit dem Kompressionsraum verbindbar ist. Das Ventil 8 ist abhängig vom Druck in der Auslassleitung 9 des Kompressors zu öffnen.

Das Ventil 8 ist dabei als federbelasteter Kolbenschieber 10 ausgebildet ist, wobei der Kolben 11 über eine geführte Kolbenstange 12 auf eine Öffnung 13 des Kompressionsraumes zum zweiten Totluftvolumen 7 wirkt und die Öffnung 13 abhängig vom Druck in der Auslassleitung oder abhängig vom Druck im Kompressionsraum öffnet oder schließt, in der hier gezeigten Ausbildung abhängig vom Druck in der Auslassleitung 9.

Im Normalbetrieb existiert nahezu kein erstes Totluftvolumen zwischen Kolben 3 und Zylinderdeckel bzw. Zylinderkopf 5. Durch eine periodische Kolbenbewegung wird nach dem bekannten Prinzip ein Luftstrom über das Auslassventil 6 durch die Auslassleitung 9 befördert. In diesem Betriebszustand wird die Effizienz des Kompressors nicht beeinträchtigt.

Steigt nun der Druck in der Auslassleitung 9 bzw. im ersten Totluftvolumen 4 im Kompressionsraum über einen zulässigen Wert an, so wird nach Öffnung des Auslassventils 6 der Kolbenschieber 10 gegen einen entsprechend vorgewählten Druck der Feder 14 angehoben. Durch das Anheben des Kolbenschiebers 10 wird die Öffnung 13 zwischen dem ersten Totluftvolumen im Zylinder 2 und mindestens einem weiteren, hier dem zweiten Totluftvolumen 7 geöffnet.

Hierbei ist der Kolbenschieber 10 so ausgelegt, dass die auf den Schieber ausgeübte Kraft durch den Luftdruck im Zylinder 2 gegenüber der durch den Luftdruck in der Auslassleitung 9 ausgeübten Kraft zu vernachlässigen ist.

Weiterhin ist der Kolbenschieber 10 und/oder die Zuleitung zu dem Schieber so ausgelegt, dass Druckspitzen aus dem Zylinder abgedämpft werden und keine Öffnung des Schiebers hervorrufen. Das zugeschaltete Totluftvolumen 7 führt zur Druckbegrenzung. Mit der Größe dieses Totluftvolumens 7 sowie dem Druck der Feder 14 auf den Schieber Kolbenschieber 10 kann der Maximaldruck des Kompressors vorgewählt werden.

Sinkt der Druck im Luftauslass zu einem bestimmten Zeitpunkt wieder unter den zulässigen Wert, so schließt der Kolbenschieber 10 die Öffnung 13 und der Kompressor kehrt wieder in seinen normalen Betriebszustand zurück.

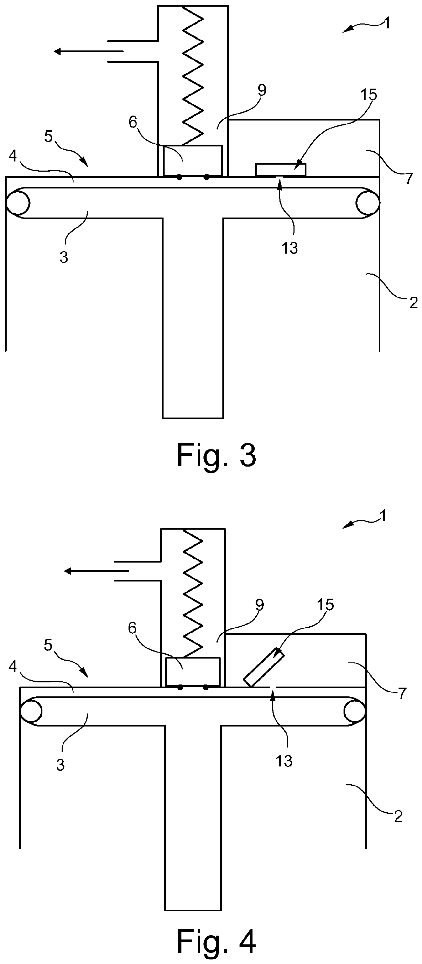

Fig. 3 und 4 zeigen entsprechend ein Ausführungsbeispiel einer erfindungsgemäßen Kompressoreinheit in einer hier nicht näher dargestellten tragbaren Druckluftquelle für das Aufpumpen von Kraftfahrzeugreifen im Fall des Luftverlustes, bei der das Ventil ein irreversibel bei einem Nenndruck öffnendes Berstventil 15 ist.

Fig. 3 stellt den Normalzustand dar. Fig. 4 zeigt den Zustand mit zugeschaltetem zweitem Totluftvolumen.

Wie schon beim vorher beschriebenen Ausführungsbeispiel der Fig. 1 und 2 existiert im Normalbetrieb nahezu kein erstes Totluftvolumen zwischen Kolben 3 und Zylinderdeckel bzw. Zylinderkopf 5, d.h. der Kompressor arbeitet ohne Effizienzeinschränkung.

Steigt nun der Druck in der Auslassleitung 9 bzw. im ersten Totluftvolumen 4 im Kompressionsraum über einen zulässigen Wert an, so wird der Verschluss bzw. das Berstventil 15 gegen einen entsprechend vorgewählte Haltekraft aufgebrochen. Hierdurch wird die Öffnung 13 zwischen dem Kompressionsraum und dem zweiten Totluftvolumen 7 geöffnet. Mit der Größe dieses Totluftvolumens 7 ist danach der Maximaldruck des Kompressors vorbestimmt.

Sinkt der Druck in der Auslassleitung 9 bzw. im ersten Totluftvolumen 4 im Kompressionsraum zu einem bestimmten Zeitpunkt wieder unter den zulässigen Wert, arbeitet der Kompressor mit verringerter Effizienz weiter, da das zweite Totluftvolumen 7 nicht wieder abgeschlossen wird.

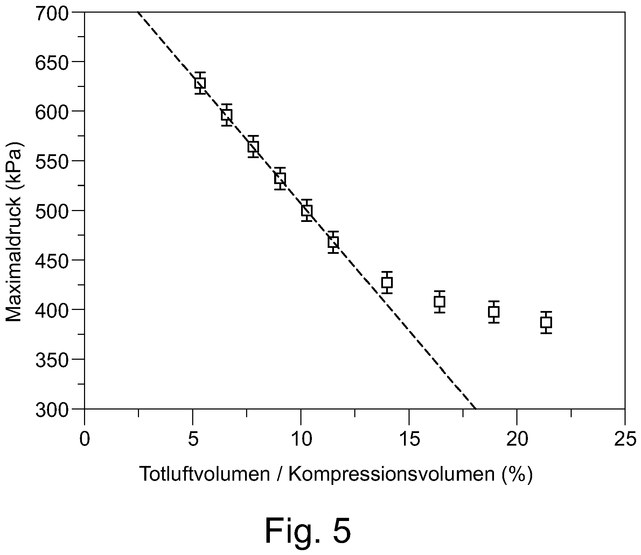

Fig. 5 zeigt zur Verdeutlichung den experimentell bestimmten Zusammenhang zwischen Größe des zweiten Totluftvolumens sowie erreichtem Maximaldruck eines Luftkompressors mit 33,0 mm Kolbendurchmesser und 7,5 mm Kolbenhub. Im erwünschten Enddruckbereich zwischen 450 kPa und 650 kPa ist dieser Zusammenhang annähernd linear.

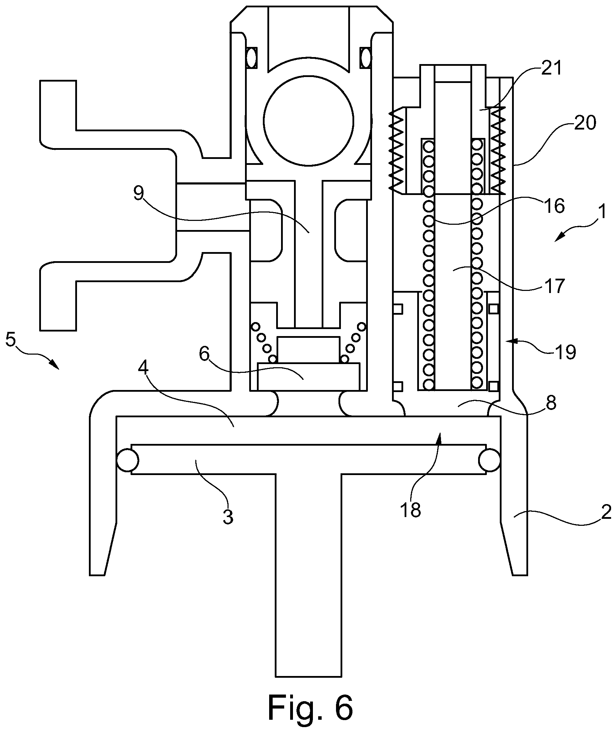

Fig. 6 zeigt eine Kompressoreinheit, bei der das weitere Totluftvolumen variabel und abhängig vom Druck im Kompressionsraum bzw. im ersten Totluftvolumen 4 kontinuierlich in seinem Inhalt veränderbar ist.

Hierzu ist das Ventil 8 als Endteil eines durch eine Feder 16 belasteten Kolbenschiebers 17 ausgebildet und öffnet oder schließt die Öffnung 18 zum angrenzenden im Zylinderkopf ausgebildeten weiteren Totluftvolumen 19. Das Öffnen oder Schließen und die Bereitstellung und Freigabe eines druckabhängig sich vergrößernden oder verkleinernden weiteren Totluftvolumens 19 erfolgt durch das druckabhängige Verschieben des federbelasteten Kolbenschiebers 17 nach oben.

Die als Abstützung der Feder ausgebildete Federbuchse 21 kann mehr oder weniger tief in die mit Innengewinde versehene Führungshülse 20 eingeschraubt sein, so dass die Federspannung und damit der Ansprechdruck einstellbar sind.

### Bezugszeichenliste

### (Teil der Beschreibung)

1 Hubkolbenverdichter
2 Zylinder
3 Kolben
4 Erstes Totluftvolumen
5 Zylinderkopf
6 Auslassventil
7 Zweites Totluftvolumen
8 Ventil
9 Auslassleitung
10 Kolbenschieber
11 Kolben
12 Kolbenstange
13 Öffnung
14 Feder
15 Berstventil
16 Feder
17 Kolbenschieber
18 Öffnung
19 Variables Totluftvolumen
20 Führungshülse
21 Federbuchse

## Patentansprüche

1. Kompressoreinheit in einer tragbaren Druckluftquelle, welche einen über ein Schubkurbelgetriebe angetriebenen Hubkolbenverdichter (1) mit einem in einem Zylinder (2) oszillierend bewegten Kolben (3) aufweist, der einen mit einem ersten Totluftvolumen (4) versehenen Kompressionsraum begrenzt, wobei der Zylinder (2) ausgangsseitig durch einen Zylinderkopf (5) mit Auslassventil (6) verschlossen ist, **dadurch gekennzeichnet, dass** der Kompressionsraum über mindestens ein Ventil (8) mit mindestens einem weiteren Totluftvolumen (7) verbindbar ist.

2. Kompressoreinheit nach Anspruch 1, bei der das weitere Totluftvolumen (7) mit dem Kompressionsraum über das Ventil (8) abhängig vom Druck in der Auslassleitung (9) des Kompressors oder abhängig vom Druck im Kompressionsraum verbindbar ist.

3. Kompressoreinheit nach Anspruch 1 oder 2, bei der das weitere Totluftvolumen (19) variabel und abhängig vom Druck in der Auslassleitung (9) des Kompressors oder abhängig vom Druck im Kompressionsraum kontinuierlich in seinem Inhalt veränderbar ist.

4. Kompressoreinheit nach einem der Ansprüche 1 bis 3, bei der das weitere variable Totluftvolumen (19) durch ein elektromechanisches Stellglied kontinuierlich veränderbar ist.

5. Kompressoreinheit nach einem der Ansprüche 1 bis 4, bei der das Ventil (8) eine Drosseleinrichtung zur Dämpfung von Druckspitzen aus dem Zylinder (2) bzw. aus dem Kompressionsraum beinhaltet.

6. Kompressoreinheit nach einem der Ansprüche 1 bis 5, bei der das weitere Totluftvolumen mit dem Kompressionsraum reversibel über das Ventil (8) verbindbar ist, wobei das Ventil vorzugsweise federbelastet ist.

7. Kompressoreinheit nach einem der Ansprüche 1 bis 6, bei der das Ventil (8) als federbelasteter Kolbenschieber (10) ausgebildet ist, wobei dessen Kolben (11) über eine geführte Kolbenstange (12) auf eine Öffnung (13) des Kompressionsraumes zum weiteren Totluftvolumen (7) wirkt und die Öffnung (13) abhängig vom Druck in der Auslassleitung (9) oder abhängig vom Druck im Kompressionsraum öffnet oder schließt.

8. Kompressoreinheit nach einem der Ansprüche 1 bis 6, bei der das Ventil (8) als Endteil eines durch eine Feder (16) belasteten Kolbenschiebers (17) ausgebildet ist, und auf eine Öffnung (18) des Kompressionsraumes zum weiteren variablen Totluftvolumen (19) wirkt, die Öffnung (13) abhängig vom Druck in der Auslassleitung (9) oder abhängig vom Druck im Kompressionsraum (4) öffnet oder schließt und bei der die Bereitstellung des variablen und druckabhängig sich vergrößernden oder verkleinernden weiteren Totluftvolumens (19) durch das druckabhängige Verschieben des federbelasteten Kolbenschiebers (17) innerhalb einer Führungshülse (20) erfolgt.

9. Kompressoreinheit nach Anspruch 8, bei der die die Führungshülse (20) ein Innengewinde aufweist und die Belastung des Kolbenschiebers (17) durch die Feder (16) über eine Federbuchse (21) einstellbar ist, die mehr oder weniger tief in die Führungshülse (20) einschraubbar ist

10. Kompressoreinheit nach einem der Ansprüche 1 bis 5, bei der das weitere Totluftvolumen (7, 19) mit dem Kompressionsraum irreversibel über das Ventil verbindbar ist.

11. Kompressoreinheit nach Anspruch 10, bei der das Ventil ein manuell wieder verschließbares Ventil ist, vorzugsweise ein Ventil mit einem von außen sichtbaren Indikator für die Offen-Stellung.

12. Kompressoreinheit nach Anspruch 10, bei der das Ventil ein irreversibel bei einem Nenndruck öffnendes Ventil ist, vorzugsweise ein Berstventil (15) ist.

13. Verwendung einer Kompressoreinheit nach einem der Ansprüche 1 bis 12 zum Abdichten und Aufpumpen von Kraftfahrzeugreifen.

14. Pannenset zur Reparatur von Kraftfahrzeugreifen mit einer Kompressoreinheit nach einem der Ansprüche 1 bis 12.

## Claims

1. Compressor unit in a portable compressed-air source, which compressor unit has a reciprocating-piston compressor (1) which is driven by means of a slider-crank mechanism and which has a piston (3) moved in oscillating fashion in a cylinder (2), which piston delimits a compression chamber provided with a first dead air volume (4), wherein the cylinder (2) is closed off at the outlet side by a cylinder head (5) with outlet valve (6), **characterized in that** the compression chamber is connectable by means of at least one valve (8) to at least one further dead air volume (7).

2. Compressor unit according to Claim 1, in which the further dead air volume (7) is connectable to the compression chamber by means of the valve (8) in a manner dependent on the pressure in the outlet line (9) of the compressor or in a manner dependent on the pressure in the compression chamber.

3. Compressor unit according to Claim 1 or 2, in which the further dead air volume (19) is continuously changeable in terms of its content variably and in a manner dependent on the pressure in the outlet line (9) of the compressor or in a manner dependent on the pressure in the compression chamber.

4. Compressor unit according to any of Claims 1 to 3, in which the further variable dead air volume (19) is continuously changeable by means of an electromechanical actuator.

5. Compressor unit according to any of Claims 1 to 4, in which the valve (8) comprises a throttle device for damping pressure peaks from the cylinder (2) or from the compression chamber.

6. Compressor unit according to any of Claims 1 to 5, in which the further dead air volume is reversibly connectable to the compression chamber by means of the valve (8), wherein the valve is preferably spring-loaded.

7. Compressor unit according to any of Claims 1 to 6, in which the valve (8) is in the form of a spring-loaded piston slide (10), wherein the piston (11) thereof acts via a guided piston rod (12) on an opening (13) of the compression chamber to the further dead air volume (7) and opens or closes the opening (13) in a manner dependent on the pressure in the outlet line (9) or in a manner dependent on the pressure in the compression chamber.

8. Compressor unit according to any of Claims 1 to 6, in which the valve (8) is formed as an end part of a piston slide (17) which is subjected to load by a spring (16), and said valve acts on an opening (18) of the compression chamber to the further variable dead air volume (19) and opens or closes the opening (13) in a manner dependent on the pressure in the outlet line (9) or in a manner dependent on the pressure in the compression chamber (4), and in which the provision of the variable further dead air volume (19), which increases or decreases in size in a pressure-dependent manner, is realized by means of the pressure-dependent displacement of the spring-loaded piston slide (17) within a guide housing (20).

9. Compressor unit according to Claim 8, in which the guide sleeve (20) has an internal thread, and the loading of the piston slide (17) by the spring (16) can be set by means of a spring bushing (21) which can be screwed into the guide sleeve (20) to a greater or lesser depth.

10. Compressor unit according to any of Claims 1 to 5, in which the further dead air volume (7, 19) is irreversibly connectable to the compression chamber by means of the valve.

11. Compressor unit according to Claim 10, in which the valve is a manually reclosable valve, preferably a valve with an externally visible indicator for the open position.

12. Compressor unit according to Claim 10, in which the valve is a valve which irreversibly opens at a nominal pressure, and is preferably a rupture valve (15) .

13. Use of a compressor unit according to any of Claims 1 to 12 for sealing and inflating motor vehicle tyres.

14. Breakdown kit for repairing motor vehicle tyres, having a compressor unit according to any of Claims 1 to 12.

## Revendications

1. Unité de compresseur dans une source d'air comprimé portable comportant un compresseur à piston de levée (1) entraîné via un mécanisme bielle-manivelle, avec un piston (3) déplacé de façon oscillante dans un cylindre (2) délimitant une chambre de compression pourvue d'un premier volume d'air non ventilé (4), le cylindre (2) étant fermé du côté de sortie par une tête de cylindre (5) équipée d'une soupape d'échappement (6), **caractérisée en ce que** la chambre de compression peut être reliée à au moins un volume d'air non ventilé supplémentaire (7) via au moins une soupape (8).

2. Unité de compresseur selon la revendication 1, dans laquelle le volume d'air non ventilé supplémentaire (7) peut être relié à la chambre de compression via la soupape (8) en fonction de la pression régnant dans la conduite d'échappement (9) du compresseur ou en fonction de la pression régnant dans la chambre de compression.

3. Unité de compresseur selon la revendication 1 ou 2, dans laquelle le volume d'air non ventilé supplémentaire (19) peut être modifié en continu dans son contenu, de façon variable et en fonction de la pression régnant dans la conduite d'échappement (9) du compresseur ou en fonction de la pression régnant dans la chambre de compression.

4. Unité de compresseur selon l'une quelconque des revendications 1 à 3, dans laquelle le volume d'air non ventilé variable supplémentaire (19) peut être modifié en continu au moyen d'un élément de commande final électromécanique.

5. Unité de compresseur selon l'une quelconque des revendications 1 à 4, dans laquelle la soupape (8) contient un dispositif d'étranglement servant à amortir les crêtes de pression provenant du cylindre (2) et/ou de la chambre de compression.

6. Unité de compresseur selon l'une quelconque des revendications 1 à 5, dans laquelle le volume d'air non ventilé supplémentaire peut être relié à la chambre de compression de façon réversible via la soupape (8), la soupape étant de préférence chargée par ressort.

7. Unité de compresseur selon l'une quelconque des revendications 1 à 6, dans laquelle la soupape (8) est réalisée sous la forme d'un robinet à piston (10) chargé par ressort, son piston (11) agissant, via une tige de piston (12) guidée, sur une ouverture (13) de la chambre de compression conduisant au volume d'air non ventilé supplémentaire (7) et ouvrant ou fermant l'ouverture (13) en fonction de la pression régnant dans la conduite d'échappement (9) ou en fonction de la pression régnant dans la chambre de compression.

8. Unité de compresseur selon l'une quelconque des revendications 1 à 6, dans laquelle la soupape (8) est réalisée sous la forme d'une partie d'extrémité d'un robinet à piston (17) chargé par un ressort (16) et agissant sur une ouverture (18) de la chambre de compression conduisant au volume d'air non ventilé variable supplémentaire (19), ouvrant ou fermant l'ouverture (13) en fonction de la pression régnant dans la conduite d'échappement (9) ou en fonction de la pression régnant dans la chambre de compression (4) et dans laquelle la mise à disposition du volume d'air non ventilé supplémentaire (19) variable et augmentant ou diminuant en fonction de la pression se produit à l'intérieur d'une douille de guidage (20), au travers du déplacement dépendant de la pression du robinet à piston (17) chargé par ressort.

9. Unité de compresseur selon la revendication 8, dans laquelle la douille de guidage (20) comporte un filet intérieur et dans laquelle la sollicitation du robinet à piston (17) est réglable au moyen du ressort (16) via un manchon à ressort (21) pouvant être vissé plus ou moins profondément dans la douille de guidage (20) .

10. Unité de compresseur selon l'une quelconque des revendications 1 à 5, dans laquelle le volume d'air non ventilé supplémentaire (7, 19) peut être relié de façon irréversible à la chambre de compression via la soupape.

11. Unité de compresseur selon la revendication 10, dans laquelle la soupape est une soupape pouvant être refermée manuellement, de préférence une soupape avec un indicateur de position ouverte visible de l'extérieur.

12. Unité de compresseur selon la revendication 10, dans laquelle la soupape est une soupape s'ouvrant de façon irréversible à une certaine pression nominale, de préférence une soupape à éclatement (15).

13. Utilisation d'une unité de compresseur selon l'une quelconque des revendications 1 à 12 servant à l'étanchéité et au gonflage de pneumatiques de véhicule automobile.

14. Kit de dépannage servant à la réparation de pneumatiques de véhicule automobile avec une unité de compresseur selon l'une quelconque des revendications 1 à 12.
